# DEMANDE DE BREVET EUROPEEN

(11) **EP 1 857 161 A1**
(43) Date de publication de la demande: **21.11.2007**
(21) Numéro de dépôt: 06290784.5
(22) Date de dépôt: 15.05.2006
(51) Int. Cl.: B01D 19/00

(54) **Système anti-bulle et vapeur pour la centrale thermique (nucléaire)**

(71) Demandeur: Zhao, Hong, 92120 Montrouge (FR)
(72) Inventeur: Zhao, Hong, 92120 Montrouge (FR)

(57) **Abrégé**

Ce système permet que l'eau de rejet d'une centrale thermique (nucléaire) soit purgée des bulles et de la vapeur qui peut servir à la production de l'énergie. Un réservoir **[**2**]** et un autre barrage **[**4**]** de la même hauteur en aval du barrage **[**1**]** de la rigole sont construits avec un piquetage **[**5**]** au fond du barrage **[**4**]**. Le barrage **[**4**]** et le réservoir **[**2**]**, ainsi que le piquetage **[**5**]**, sont branchés sur le groupe de moteurs **[**6**]** qui est installé en arrière du barrage **[**4**]**; une canalisation de rejet est guidée vers la mer ou la rivière. L'utilisation de ce système peut non seulement répondre à la question de la pollution des rejets en résolvant le problème des bulles et de la vapeur mais aussi contribuer à la reproduction d'électricité.

## Description

En effet, c'est un système de protection de l'environnement, qui sert à casser les bulles et supprimer la vapeur des eaux de rejet d'une centrale thermique (nucléaire).

Jusqu'à aujourd'hui, les centrales prenant l'eau de mer (ou de rivière) comme liquide de refroidissement ont édifié un barrage à la sortie, et l'eau de refroidissement est évacuée par son débordement, afin d'éviter l'influence de la marée et garantir le siphon à l'intérieur de la boîte de condenseur. Lorsqu'il existe une pente, l'eau sortie apporte une energie potentielle avec le débit augmenté, en dehors, l'eau coule avec la vitesse et l'air en produisant dans la mer des bulles qui altèrent le paysage naturel du bord de la mer, surtout quand il fait beaucoup de vent, les bulles sont entraînées très loin avec la vapeur d'eau ou le sel qui génère la corrosion. Du fait du développement de l'industrie électrique, le problème de la pollution devient de plus en plus important, la solution est recherchée partout dans le monde entier.

Par exemple :
1. Rajouter un appareil d'aspersion au bout de la rigole, éviter les bulles par un moyen chimique. NALCO13 était généralement utilisé ; mais, outre son coût, une autre pollution en dérivait et son utilisation a été interdite.
2. Mise en place d'un système de collecteur qui se compose d'une pompe à vide qui transfère l'eau rejetée dans un container où les bulles sont traitées. Mais son coût et la protection de l'environnement interdisent de s'en servir.
3. Casser les bulles par l'aspersion de liquide chimique n'est pas praticable en raison aussi bien de l'investissement que des frais de maintenance. De plus l'efficacité reste à 50%.

Par conséquent, les solutions existantes ne permettent pas de résoudre les problèmes de la pollution et des bulles.

L'invention que nous présentons est une nouvelle technologie.
Un réservoir et un piquetage en aval du barrage de la rigole, et une liaison avec le groupe moteur-turbine qui impulse une canalisation de rejet à 0.5/1.0 m sous la mer.

Le barrage conçu par le système inventé sera à la même hauteur que celui d'origine de la rigole, afin d'assurer un transfert stable et éviter la production des bulles. Tandis qu'il faudra prévoir une certaine dénivellation entre l'entrée du groupe et le fond du réservoir sous niveau de mer : 2-3 m.

Nous recommandons dans notre système de poser deux groupes de moteur-turbine (dont un de redondance), pour que les deux machines soient disponibles et satisfassent la demande de rejet à 100%.

Une sortie de débordement est conçue entre le barrage et le réservoir, au même niveau que le barrage, afin de garantir le rejet en cas d'indisponibilité des deux groupes.

Il est recommandé de considérer le changement de marée, de pente et de débit avant d'adopter le système. Une centrale avec un rejet limité n'a pas à considérer l'aspect : production d'énergie, mais elle peut prendre en considération l'aspect : élimination des bulles afin de réduire le coût ; en revanche, si la centrale est plus importante, l'installation du système permet d'améliorer le rendement économique de la centrale.

Ainsi, l'invention de notre système résout non seulement le problème des bulles et de la vapeur qui gênent depuis longtemps les centrales thermiques, mais aussi le problème de la protection de l'environnement. De plus, ce système permet de produire l'électricité avec de l'eau rejetée.

Explication supplémentaire du système par les shémas ci-dessous.
a) Plan synoptique du système ;
b) Vue en plan ;
c) Plan de la rigole.

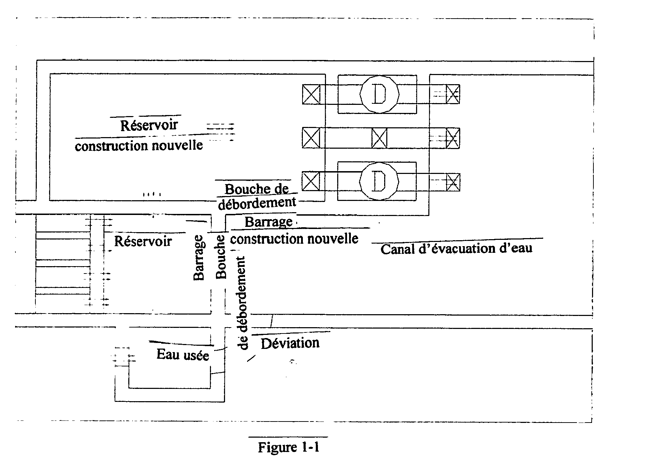

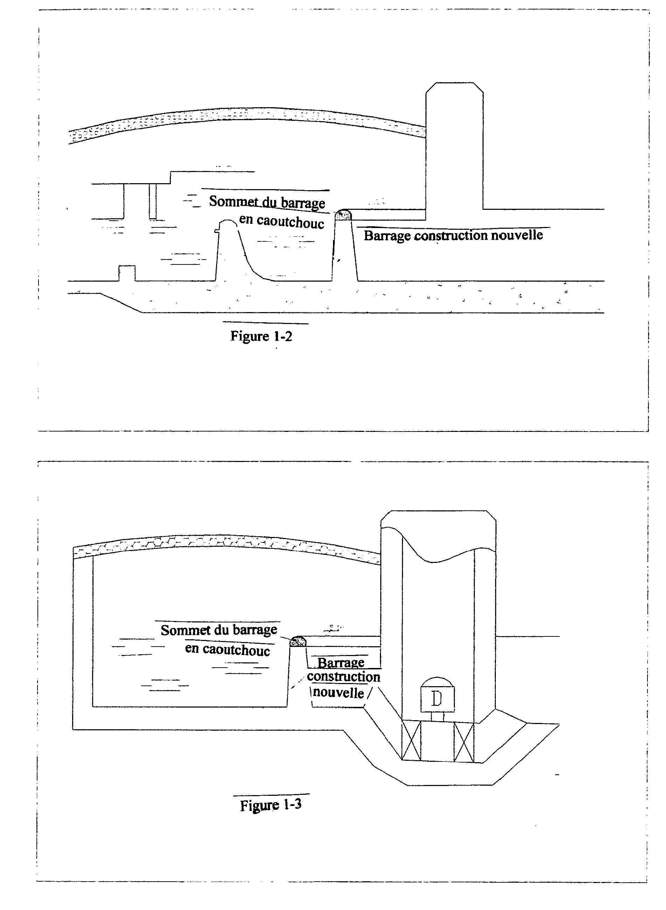

## Revendications

1. Ce système permet de purger l'eau de rejet d'une centrale thermique (nucléaire) des bulles et de la vapeur, qui peut servir à la production d'énergie. Un réservoir **[**2**]** et un autre barrage **[**4**]** de la même hauteur en aval du barrage **[**1**]** de la rigole sont construits avec un piquetage **[**5**]** au fond du barrage **[**4**]** Le barrage **[**4**]** et le réservoir **[**2**]** ainsi que le piquetage **[**5**]** sont branchés sur le groupe de moteurs **[**6**]** qui est installé en arrière du barrage **[**4**]**, un tube de rejet entre dans 0.5-1.0m sous la mer ou la rivière.

2. Ce système se **caractérise par** l'ouverture de débordement **[**3**]** prévue entre le barrage **[**1**]** et le réservoir **[**2**]**.

3. En plus des points 1 et 2 ci-dessus mentionnés, la conception d'un piquetage **[**6**]** avec une canalisation de débit **[**8**]** semble garantir l'efficacité.
